(19) **Europäisches Patentamt European Patent Office Office européen des brevets**

(11) **EP 4 610 307 A1**

(12) **EUROPEAN PATENT APPLICATION**
published in accordance with Art. 153(4) EPC

(43) Date of publication:
**03.09.2025 Bulletin 2025/36**

(21) Application number: **23883098.8**

(22) Date of filing: **25.10.2023**

(51) International Patent Classification (IPC):
*C08L 25/12* (2006.01)        *C08L 51/04* (2006.01)
*C08L 25/08* (2006.01)        *C08L 33/06* (2006.01)
*C08L 55/02* (2006.01)

(52) Cooperative Patent Classification (CPC):
**C08L 25/08; C08L 25/12; C08L 33/06; C08L 51/04; C08L 55/02**

(86) International application number:
**PCT/KR2023/016671**

(87) International publication number:
**WO 2024/090993 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **25.10.2022  KR 20220138522**
                  **26.10.2022  KR 20220139506**

(71) Applicant: **LG CHEM, LTD.**
**Seoul 07336 (KR)**

(72) Inventors:
• **KIM, Yoo Vin**
  **Daejeon 34122 (KR)**

• **HEO, Jae Won**
  **Daejeon 34122 (KR)**
• **JEON, Hee Jung**
  **Daejeon 34122 (KR)**
• **HAN, Hye Soo**
  **Daejeon 34122 (KR)**
• **KIM, Chang Hoe**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **THERMOPLASTIC RESIN COMPOSITION**

(57)     The present invention relates to a thermoplastic resin composition, and the resin composition includes an aromatic vinyl-vinyl cyanide-based cross-linked copolymer, and a 60° gloss measured according to ASTM D523 using a gloss meter is 25 or less, and a light reflection coefficient of variation calculated by Equation 1 below is 2.0 or less, and it is possible to achieve a matte property even through injection molding.

[Equation 1]

$$C_{LR} = D_L/M_L$$

$C_{LR}$ is a light reflection coefficient of variation, $D_L$ is a standard deviation of luminous intensity, and $M_L$ is an average luminous intensity.

**Description**

**[Technical Field]**

Cross-Reference to Related Application

This application claims priority to and the benefit of Korean Patent Application No. 2022-0139506, filed on October 26, 2022, and Korean Patent Application No. 2022-0138522, filed on October 25, 2022, the entire contents of which are incorporated herein by reference.

Technical Field

The present invention relates to a thermoplastic resin composition capable of achieving a matte property.

**[Background Art]**

In general, acrylonitrile-butadiene-styrene (hereinafter referred to as ABS) resin has excellent impact resistance and excellent processability, so ABS resin is widely used for various purposes such as automobiles, electrical and electronic products, office supplies, home appliances, toys, and stationery. However, due to the susceptibility of the ABS resin to be easily oxidized by oxygen, ultraviolet rays, light, and heat because of the double bond of butadiene rubber used as an impact modifier, which results in discoloration and a reduction in appearance characteristics, the ABS resin has limitations in use as an exterior material, and even when used as an interior material, ABS resin does not satisfy customer requirements due to its discoloration.

With the recent trend towards high-end home appliances and automobile interior materials, interest has been focused on sensitive resins that can express a low-gloss and soft texture without painting instead of cold, artificially glossy materials. In line with the trend towards high-end home appliances and automobile interior materials, the automobile industry is excluding coating and painting processes and using low-gloss reins due to indoor air quality regulations and environmental issues.

A method used to prepare low-gloss resins is to create a low-gloss effect through diffuse reflection that scatters incident light by greatly adjusting the smoothness of the resin surface. Specifically, a method of preparing large rubber particles with an average particle diameter of 1 μm or more can be used, and although a resin prepared in this way can have a reduced gloss deviation on the entire surface of the molded product, the low-gloss effect is insufficient, and heat resistance and impact strength are reduced.

Another method is to create a low-gloss effect on the surface of the injection product by embossing the mold to make an uneven surface of the molded product. However, a product prepared in this way has an excellent low-gloss effect, but separate molds are required for each product shape, and the gloss is partially increased due to the uneven glossiness of the resin itself. As the size of molded products to which low-gloss resin is applied becomes larger, a gloss deviation in which high gloss is expressed unevenly during molding is occurring. To solve such problems, mold analysis is used to adjust injection molding conditions and mold gate locations, but there are limitations.

Still another method is to prepare a low-gloss resin by graft polymerization of a monomer such as an ethylene-unsaturated carboxylic acid onto a resin. Although this method provides a resin with overall good physical properties, heat resistance is rapidly reduced.

U.S. Patent Registration No. 4,460,742 discloses a low-gloss resin composition using a cross-linked copolymer. This exhibits a low-gloss effect by adding rubber particles with a large diameter or a matting agent. However, an excess amount of matting agent is required, resulting in a reduction in impact strength and heat resistance.

Therefore, there is a need to develop a new low-gloss thermoplastic material which has excellent weather resistance, heat resistance, and low-gloss characteristics while uniformly exhibiting low-gloss characteristics on the entire surface of a molded product.

[Related Art Documents]

[Patent Documents]

(Patent Document 1) U.S. Patent Registration No. 4,460,742

**[Disclosure]**

**[Technical Problem]**

The present invention is directed to providing a matte thermoplastic resin composition with a smooth and matte surface through injection molding without additional corrosion treatment on the mold surface.

[Technical Solution]

In order to solve the above-mentioned problems, the present invention provides a resin composition including an aromatic vinyl-vinyl cyanide-based cross-linked copolymer, wherein a 60° gloss measured according to ASTM D523 using a gloss meter is 25 or less, and a light reflection coefficient of variation calculated by Equation 1 below is 2.0 or less.

$$[\text{Equation 1}]$$

$$C_{LR} = D_L/M_L$$

In Equation 1, $C_{LR}$ is a light reflection coefficient of variation, $D_L$ is a standard deviation of luminous intensity, and $M_L$ is an average luminous intensity.
Another aspect of the present invention provides an injection molded product including the thermoplastic resin composition.

**[Advantageous Effects]**

A resin composition according to the present invention has a low gloss and can have a matte property and secure a smooth surface by adjusting a light reflection coefficient of variation to a low level, and such a matte and smooth surface is achieved through injection molding without additional corrosion treatment on the mold surface.

**[Modes of the Invention]**

Hereinafter, the present invention will be described in further detail to help in understanding the present invention.
Terms and words in this specification and claims should not be construed as limited to their conventional or dictionary meanings but should be construed as a meaning and concept consistent with the technical idea of the present invention based on the principle that the inventors can properly define the concept of terms in order to describe their invention in the best way.
Terms and measurement methods used in the present invention may be defined as follows, unless otherwise defined.
The term "composition" used in the present invention includes not only reaction products and decomposition products formed from the material of the composition, but also mixtures of materials including the composition.
The term "monomer unit" or "cross-linking unit" used in the present invention may be a repeating unit, which is formed when a compound used as a monomer or a compound used as a cross-linking agent participates in a polymerization or cross-linking reaction, a structure derived therefrom, or the substance itself.
The term "derivative" used in the present invention may be a compound having a structure in which one or more of the hydrogen atoms constituting the original compound are substituted with a halogen group, an alkyl group, or a hydroxy group.
In the present invention, "polymerization conversion rate" refers to the degree to which monomers are polymerized to form a polymer through a polymerization reaction. After taking a portion of the polymer in the reactor during polymerization as a sample, the weight of the polymer without moisture is calculated through Equation 3 below, and then the sample is dissolved in a tetrahydrofuran (THF) solvent and precipitated with methanol (MeOH) to remove unreacted monomers, and the precipitated suspended solid is dried to obtain a polymer, and after measuring the weight of the polymer, the polymerization conversion rate is calculated using the following Equation 4.

(Actual weight of polymer) = (Weight of collected polymer) - (Weight of collected polymer X moisture content)                [Equation 3]

Polymerization conversion rate (%) = [(Weight of polymer obtained by drying) / (Actual weight of polymer)] X 100                [Equation 4]

**Thermoplastic resin composition**

A resin composition according to the present invention includes an aromatic vinyl-vinyl cyanide-based cross-linked copolymer, and a 60° gloss measured according to ASTM D523 using a gloss meter is 25 or less, and a light reflection coefficient of variation calculated by Equation 1 below is 2.0 or less.

$$[\text{Equation 1}]$$

$$C_{LR} = D_L/M_L$$

In Equation 1, $C_{LR}$ is the light reflection coefficient of variation, $D_L$ is a standard deviation of luminous intensity, and $M_L$ is an average luminous intensity.

According to an embodiment of the present invention, the resin composition has a gloss of 25 or less, preferably 20 or less, more preferably 17 or less, still more preferably 15 or less. The gloss is a representative value that may express glossiness (high-gloss and low-gloss) or mattness, and most commercially available matte molded products have a gloss of around 30, which in fact cannot be considered as being matte, but when the resin composition of the present invention is used, a gloss at a very low level of 25 or less may be achieved, making it possible to achieve a matte product.

Existing matte products are generally produced by injecting a resin after roughening a surface of the injection mold with corrosion treatment to make the surface have a characteristic of being diffusely reflective. However, this method is not suitable for mass production because processability decreases as the injection mold wears out.

On the other hand, some molded products achieve mattness through post treatment of a low-gloss product. For example, a pattern on the surface is formed by applying a coextruded film including a cross-linked product or by applying a cross-linked product to a product and then performing UV curing. However, when this method is used, the product has very high defect rate and low reproducibility of physical properties, and the method is not cost-effective because additional processes such as coating and curing are required.

A resin composition according to an embodiment of the present invention has the same gloss as described above and a light reflection coefficient of variation of 2.0 or less, and thus it is possible to provide a matte molded product with a smooth surface. The light reflection coefficient of variation may be 2.0 or less, preferably 1.9 or less, more preferably 1.8 or less, still more preferably 1.7 or less, and most preferably 1.5 or less.

The light reflection coefficient of variation reflects not only the smoothness of the molded product surface but also the gloss, which indicates a matte and smooth surface, that is, diffuse reflection occurs equally anywhere on the surface, and thus a high-quality matte molded product may be provided. In other words, a light reflection coefficient of variation greater than 2.0 indicates that the surface is not smooth, and thus diffuse reflection does not occur on any part of the surface.

The light reflection coefficient of variation may be derived using Phyton in the following way.

1) Sample imaging: Using a DSLR camera (Canon 750D) and a 200 mm x 200 mm white LED (Collimated Backlight LTS-3PFT), a prepared sample is photographed and imaged when a distance between the camera and the sample is set to 40 cm, and a distance between the sample and the light is set to 100 cm, and an angle is 90°.

2) Grayscale conversion of sample image: The sample image is converted to grayscale (0 to 255) using the OpenCV library. A grayscale value is assigned to each pixel in the sample image, and the grayscale value is used as luminous intensity.

3) Reconstruction of the image: The image is reconstructed by dividing the image into grids of 200 $\mu$m x 200 $\mu$m and averaging luminous intensity values (grayscale values) of the pixels in each grid. Each grid has one averaged luminous intensity value.

4) Luminous intensity correction: The target grid is set as Zone 1, the 8 grids adjacent to Zone 1 are set as Zone 2, and the 16 grids adjacent to Zone 2 are set as Zone 3, and after assigning 1, -0.0625, and -0.03125 to Zone 1, Zone 2, and Zone 3, respectively, as a correction factor, the corrected luminous intensity value of the target grid is derived using Equation 2 below.

$$[\text{Equation 2}]$$

$$L = 2L^1 + \sum_{k=1}^{8}(-0.0625\,L_k^2) + \sum_{m=1}^{16}(-0.03125L_m^3)$$

In Equation 2, L is the corrected luminous intensity value of the target grid, $L^1$ is the luminous intensity of the grid in Zone 1, $L^2_1$, $L^2_2$, $L^2_3$, ..., $L^2_8$ are the respective luminous intensities of the 8 grids in Zone 2, and $L^3_1$, $L^3_2$, $L^3_3$, ..., $L^3_{16}$ are the respective luminous intensities of the 16 grids in Zone 3.

The correction factor is intended to readjust the luminous intensity in consideration of the visual suppression effect and may minimize errors caused by optical illusions in which the luminous intensity of the target grid may be evaluated differently by the luminous intensity of surrounding grids when observed by the naked eye. Specifically, in terms of the "mattness" of products, it is more important to be judged as being matte by human visual perception, so not only the value measured using a device needs to indicate mattness, but also it needs to be judged as being matte by visual perception, and therefore, the correction factor may be applied to the measured value so that the measured value derived using the device is equivalent to the actual visual effect after considering optical illusions.

5) Average value and standard deviation: After obtaining the average and standard deviation from the corrected luminous intensity values of each grid, the light reflection coefficient of variation is derived by substituting the average value and standard deviation of the luminous intensity into Equation 1.

The resin composition according to an embodiment of the present invention has a low gloss and a low light reflection coefficient of variation, so it is possible to provide a matte molded product with a smooth surface, and these properties may be achieved by including an aromatic vinyl-vinyl cyanide-based cross-linked copolymer, which can solve problems that existing matte molded products have.

<u>(1) Aromatic vinyl-vinyl cyanide-based cross-linked copolymer and preparation method thereof</u>

According to an embodiment of the present invention, the resin composition includes an aromatic vinyl-vinyl cyanide-based cross-linked copolymer, and the aromatic vinyl-vinyl cyanide-based cross-linked copolymer may be included in an amount of 1 part by weight to 30 parts by weight, preferably 3 parts by weight to 20 parts by weight based on 100 parts by weight of the resin composition.

The cross-linked copolymer provides the resin composition with surface characteristics so that light may be diffusely reflected from the surface, and the copolymer may be prepared in a form with higher strength due to cross linking and uniformly distributed in the matrix resin. When the cross-linked copolymer is included in the resin composition, the gloss and light reflection coefficient of variation may be very low. When the cross-linked copolymer is included in the above range, the above effects may be achieved much easier.

According to an embodiment of the present invention, the cross-linked copolymer may include a cross-linked part including a cross-linking functional compound, an aromatic vinyl-based monomer unit, and a vinyl cyanide-based monomer unit.

According to an embodiment of the present invention, the cross-linked part may include a cross-linking functional compound unit, and the cross-linking functional compound may include one or more selected from the group consisting of a silicone-based compound, an acrylic compound, and a vinyl-based compound, and the cross-linked part may be composed of units derived from these compounds.

The cross-linked copolymer according to an embodiment of the present invention may have very uniformly distributed cross-linked parts, and as the degree to which the cross-linked part is distributed is appropriate, the fluidity among all chains may be maintained.

The cross-linked copolymer may be a random copolymer and have a uniform composition of an aromatic vinyl-based monomer unit and a vinyl cyanide-based monomer unit in the copolymer. The uniform composition of the monomer units may mean that the ratio of monomer units present in the growing polymer, which is polymerized by the polymerization reaction of monomers, remains constant. In a specific example, as polymerization progresses, that is, over the polymerization time, whenever a portion of the polymer in the reactor is collected as a sample, the proportion of each monomer unit forming the polymer remains constant.

According to an embodiment of the present invention, the aromatic vinyl-based monomer unit and vinyl cyanide-based monomer unit may be a repeating unit formed by each of the aromatic vinyl-based monomer unit and vinyl cyanide-based monomer unit participating in the polymerization reaction. As a specific example, the polymerization reaction may be a radical polymerization reaction, and thus the repeating unit may be derived from carbon-carbon double bonds present in the aromatic vinyl-based monomer and the vinyl cyanide-based monomer.

According to an embodiment of the present invention, the method of preparing the aromatic vinyl-vinyl cyanide-based cross-linked copolymer includes: initiating polymerization by adding a first reaction solution including an aromatic vinyl-based monomer and a vinyl cyanide-based monomer to a reactor (S1); and performing polymerization while adding a second reaction solution including a cross-linking functional compound to the reactor (S2), wherein the second reaction solution may be added two or more times in a divided manner.

Step (S1) is a step of initiating polymerization, which may include adding the reaction solution to the reactor and increasing the temperature of the reactor to a predetermined temperature. When the internal temperature of the reactor is increased above the predetermined temperature even in step (S1), polymerization proceeds in the presence of a polymerization initiator, and the internal temperature of the reactor in step S1 may be increased to about 60 °C to 120 °C, preferably 70 °C to 110 °C.

According to an embodiment of the present invention, the aromatic vinyl-based monomer may be one or more selected from the group consisting of styrene, $\alpha$-methylstyrene, $\alpha$-ethylstyrene, p-methylstyrene, o-methylstyrene, o-t-butylstyrene, bromostyrene, chlorostyrene, trichlorostyrene, and derivatives thereof, and as a specific example, may be styrene.

The aromatic vinyl-based monomer may be added in an amount of 30 parts by weight to 95 parts by weight, 40 wt% to 90 parts by weight, 50 parts by weight to 85 parts by weight, or 60 to 80 parts by weight, based on 100 parts by weight of the total added monomers including the aromatic vinyl-based monomer and the vinyl cyanide-based monomer, and within this range, a copolymer with a high polymerization conversion rate may be obtained, and the copolymer may have excellent compatibility with a thermoplastic resin while the mechanical properties thereof are maintained. Preferably, 10 wt% to 50 wt% of the aromatic vinyl-based monomer based on the total added amount may be added to the first reaction solution in step (S1), and the remaining 50 wt% to 90 wt% may be included in the second reaction solution in step (S2) and added two or more times in a divided manner.

According to an embodiment of the present invention, the vinyl cyanide-based monomer may be one or more selected from the group consisting of acrylonitrile, methacrylonitrile, ethacrylonitrile, and derivatives thereof, and as a specific example, may be acrylonitrile.

**According** to an embodiment of the present invention, the vinyl cyanide-based monomer may be added in an amount of 5 parts by weight to 70 parts by weight, 10 parts by weight to 60 parts by weight, 15 parts by weight to 50 parts by weight, or 20 parts by weight to 40 parts by weight, based on the total amount of added monomers including the aromatic vinyl-based monomer and the vinyl cyanide-based monomer, and within this range, a copolymer with a high polymerization conversion rate may be obtained, and the mechanical properties of the copolymer may be maintained while having excellent compatibility with a thermoplastic resin. Preferably 10 wt% to 50 wt% of the vinyl cyanide-based monomer based on the total added amount may be added to the first reaction solution in step (S1), and the remaining 50 wt% to 90 wt% may be included in the second reaction solution in step (S2) and added two or more times in a divided manner.

According to an embodiment of the present invention, the method of preparing the cross-linked copolymer may be carried out by suspension polymerization, and the first reaction solution in step S1 is a solvent for carrying out polymerization and may further include one or more additives selected from the group consisting of a polymerization initiator, a water-soluble solvent, a dispersant, a dispersion aid, and a molecular weight regulator, and polymerization may be carried out in the presence of these additives.

According to an embodiment of the present invention, the polymerization initiator is used to easily initiate polymerization and is not particularly limited as long as the polymerization initiator does not adversely affect polymerization, and may be, for example, one or more selected from the group consisting of 2,5-dimethyl-2,5-di(t-butylperoxy) hexane, di(t-butylperoxy-isopropyl)benzene, t-butyl cumyl peroxide, di-(t-amyl)-peroxide, dicumyl peroxide, butyl 4,4-di(t-butylperoxy)valerate, t-butylperoxybenzoate, 2,2-di(t-butylperoxy)butane, t-amyl peroxy-benzoate, t-butylperoxy-acetate, t-butylperoxy-(2-ethylhexyl)carbonate, t-butylperoxy isopropyl carbonate, t-butyl peroxy-3,5,5-trimethyl-hexanoate, 1,1-di(t-butylperoxy)cyclohexane, t-amyl peroxyacetate, t-amylperoxy-(2-ethylhexyl)carbonate, 1,1-di(t-butylperoxy)-3,5,5-trimethylcyclohexane, 1,1-di(t-amylperoxy)cyclohexane, t-butyl-monoperoxy-malate, 1,1'-azodi(hexahydrobenzonitrile), and 1,1'-azobis(cyclohexane-1-cyclonitrile), and specifically, one or more selected from the group consisting of dicumyl peroxide, 1,1-di(t-butyl peroxy)cyclohexane, and 1,1'-azobis(cyclohexane carbonitrile).

The polymerization initiator may be used in an amount of 0.001 parts by weight to 0.5 parts by weight, specifically 0.003 parts by weight to 0.45 parts by weight, or 0.06 parts by weight to 0.25 parts by weight, based on 100 parts by weight of the total amount of monomers used in polymerization, that is, the aromatic vinyl-based monomer and the vinyl cyanide-based monomer, and when the polymerization initiator is used within this range, the polymerization reaction may be carried out more easily, and thus the polymerization conversion rate may be increased.

According to an embodiment of the present invention, the water-soluble solvent may be ion-exchanged water or deionized water. Meanwhile, according to an embodiment of the present invention, the monomer droplet may include a water-soluble solvent, and the water-soluble solvent may be ion-exchanged water or deionized water and may be the same as the water-soluble solvent added before initiating polymerization.

According to an embodiment of the present invention, the dispersant may be one or more selected from the group consisting of water-soluble polyvinyl alcohol, partially saponified polyvinyl alcohol, polyacrylic acid, a copolymer of vinyl acetate and maleic anhydride, hydroxypropyl methylcellulose, gelatin, calcium phosphate, tricalcium phosphate, hydroxyapatite, sorbitan monolaurate, sorbitan trioleate, polyoxyethylene, sodium lauryl sulfate, sodium dodecylbenzenesulfonate, and sodium dioctylsulfosuccinate, and as a specific example, may be tricalcium phosphate.

**According** to an embodiment of the present invention, the dispersant may be used in an amount of 0.5 parts by weight to 2.0 parts by weight, 0.5 parts by weight to 1.5 parts by weight, or 1.0 part by weight to 1.5 parts by weight, based on 100 parts by weight of the total amount of added monomers, and within this range, a copolymer with more uniform particles may be prepared by increasing the dispersion stability of monomers in the polymerization system.

According to an embodiment of the present invention, the method of preparing the cross-linked copolymer may be carried out by further including a dispersion aid, and as a specific example, the dispersion aid may be a polyoxyethylene-based dispersion aid, and as a more specific example, may be polyoxyethylene alkyl ether phosphate, and in this case, polymerization stability may be excellent.

According to an embodiment of the present invention, the molecular weight regulator may be, for example, one or more selected from the group consisting of an α-methylstyrene dimer, t-dodecyl mercaptan, n-dodecyl mercaptan, octyl mercaptan, carbon tetrachloride, methylene chloride, methylene bromide, tetraethyl thiuram disulfide, dipentamethylene thiuram disulfide, and diisopropylxanthogen disulfide, and as a specific example, may be t-dodecyl mercaptan.

According to an embodiment of the present invention, the molecular weight regulator may be used in an amount of 0.01 parts by weight to 0.40 parts by weight, 0.05 parts by weight to 0.30 parts by weight, or 0.10 to 0.25 parts by weight, based on 100 parts by weight of the total amount of added monomers, and within this range, a copolymer with an appropriate weight average molecular weight may be prepared.

According to an embodiment of the present invention, in step (S2), the second reaction solution including a cross-linking functional compound may be added two or more times in a divided manner, preferably three or more times. The cross-linking functional compound may include a functional group such as a siloxane group, a vinyl group, or an acrylic group, and two or more functional groups, preferably three or more functional groups, may be present in one cross-linking functional compound.

When polymerization is carried out by adding the cross-linking functional compound (hereinafter referred to as "cross-linking agent") only at the beginning of polymerization, the cross-linking effect may be relatively low. In other words, the concentration of the cross-linking agent at the beginning of polymerization is relatively high, so a side reaction in which the cross-linking agents combine with each other is highly likely to occur, and as the concentration of the cross-linking agent decreases in the later stage of polymerization, it may be difficult to uniformly distribute cross-linked parts in copolymer chains and the yield of cross-linked copolymer may be significantly reduced because the production of cross-linked copolymers is not smooth. This may result in an increase in gloss and light reflection coefficient of variation.

According to an embodiment of the present invention, the cross-linking functional compound is added in step (S2) and may be added immediately after step (S1) and added two or more times in a divided manner, preferably three or more times in a divided manner, during polymerization.

According to an embodiment of the present invention, the time interval between the divided additions of the cross-linking functional compound in step (S2) may be 1% to 30% of the total polymerization time. When there are time intervals between the divided additions, the cross-linking degree within the entire copolymer chain may be constant while at an appropriate level and the cross-linking density may be excellent, which may be crucial in making the surface of a resin molded product diffusely reflective. The addition of the cross-linking agent in a divided manner may be performed for 20% to 70% of the total polymerization time, and it is preferable to begin and terminate the divided addition within this time range to provide a sufficient cross-linking effect.

According to an embodiment of the present invention, the cross-linking functional compound may be added in a divided manner immediately after step (S1), and the addition in a divided manner may be terminated before a polymerization conversion rate is 50% to 75%.

According to an embodiment of the present invention, the cross-linking functional compound added in a divided manner during polymerization in step (S2) may be added in an amount of 0.05 parts by weight to 0.30 parts by weight, preferably 0.05 parts by weight to 0.20 parts by weight, more preferably 0.05 parts by weight to 0.15 parts by weight, based on 100 parts by weight of the total amount of added monomers. When an amount of added cross-linking functional compound is less than 0.05 parts by weight, a desired level of cross-linking degree may not be achieved due to a lack of cross-linking functional compounds that constitute the cross-linked product, so it is difficult to achieve a low gloss. On the other hand, when an amount of added cross-linking functional compound exceeds 0.3 parts by weight, an excessively high cross-linking degree may cause an imbalance, and the formation of oligomers due to reactions between cross-linking agents and reactions between cross-linking agents and monomers may adversely affect a matte property, and significantly reduced polymerization stability may cause polymerization failure and low yield. Each amount of the cross-linking functional compound used in the divided additions may be the same or different, and it is preferably to adjust the amount so that the variation in amounts is not large, and the added amount may be the total amount that is added in a divided manner.

As described above, the cross-linking functional compound is a compound having two or more vinyl groups, acrylic groups, or siloxane groups and may be, for example, a silicone-based compound or a polyene-based compound, and the polyene-based cross-linking agent may be, for example, a vinyl-based cross-linking agent or an acrylic-based cross-linking agent, and specifically, one or more selected from the group consisting of divinylbenzene, trivinylbenzene, ethylene glycol di(meth) acrylate, allyl(meth) acrylate, diallyl phthalate, diallyl maleate, triallyl isocyanurate, and trialkyl isocyanurate may be used, and divinylbenzene may be preferably used.

The silicone-based cross-linking agent may be, for example, 1,3,5-triisopropyl-1,3,5-trivinyl-cyclotrisiloxane, 1,3,5,7-tetraisopropyl-1,3,5,7-tetravinyl-cyclotetrasiloxane, 1,3,5,7,9-pentaisopropyl-1,3,5,7,9-pentavinyl-cyclopentasiloxane, 1,3,5-trisec-butyl-1,3,5-trivinyl-cyclotrisiloxane, 1,3,5,7-tetrasec-butyl-1,3,5,7-tetravinyl-cyclotetrasiloxane, 1,3,5,7,9-pentasec-butyl-1,3,5,7,9-pentavinyl-cyclopentasiloxane, 1,3,5-trimethyl-1,3,5-trivinyl-cyclotrisiloxane, 1,3,5,7-tetramethyl-1,3,5,7-tetravinyl-cyclotetrasiloxane, 1,3,5,7,9-pentamethyl-1,3,5,7,9-pentavinyl-cyclopentasiloxane, 1,3,5-triethyl-1,3,5-trivinyl-cyclotrisiloxane, 1,3,5,7-tetraethyl-1,3,5,7-tetravinyl-cyclotetrasiloxane, 1,3,5,7,9-pentaethyl-1,3,5,7,9-pentavinyl-cyclopentasiloxane, or a mixture thereof, and divinylsilane, trivinylsilane, dimethyldivinylsilane, divinylmethylsilane, methyltrivinylsilane, diphenyldivinylsilane, divinylphenylsilane, trivinylphenylsilane, divinylmethylphenyl silane, tetravinylsilane, dimethylvinyl, disiloxane, divinyldiphenylchlorosilane, and the like may be mixed and used, but is not limited thereto.

The silicone-based cross-linking agent may be preferably 1,3,5-trimethyl-1,3,5-trivinyl-cyclotrisiloxane, 1,3,5,7-tetramethyl-1,3,5,7-tetravinyl- cyclotetrasiloxane, 1,3,5,7,9-pentamethyl-1,3,5,7,9-pentavinyl-cyclopentasiloxane, 1,3,5-triethyl-1,3,5-trivinyl-cyclotrisiloxane, 1,3,5,7-tetraethyl-1,3,5,7-tetravinyl-cyclotetrasiloxane, 1,3,5,7,9-pentaethyl-1,3,5,7,9-pentavinyl-cyclopentasiloxane, or a mixture thereof and more preferably 1,3,5,7-tetramethyl-1,3,5,7-tetravinyl-cyclotetrasiloxane and the like.

According to an embodiment of the present invention, the method of preparing the aromatic vinyl-vinyl cyanide-based cross-linked copolymer may include: initiating polymerization by adding a first reaction solution including an aromatic vinyl-based monomer and a vinyl cyanide-based monomer to a reactor (S1); and performing polymerization while adding a second reaction solution including a cross-linking functional compound to the reactor (S2), wherein the second reaction solution may be added two or more times in a divided manner, and the second reaction solution may further include one or more of a molecular weight regulator and a polymerization initiator.

When the second reaction solution including a molecular weight regulator and/or a polymerization initiator is added in a divided manner with a cross-linking functional compound, it may have a synergistic effect on the desired effect, and since it is easier to control the reactivity between monomers and the reactivity between polymer chains and cross-linking agents, a smooth and matte molded product with low gloss and a low light reflection coefficient of variation may be obtained.

According to an embodiment of the present invention, the cross-linking functional compound is added in a divided manner in step (S2) but may be included in the first reaction solution to initiate polymerization. Adding the cross-linking functional compound to the first reaction solution may not replace the effect of adding the cross-linking functional compound in step (S2), but an additional cross-linking effect may be achieved by adding a cross-linking agent before initiating polymerization. However, when a cross-linking functional compound is added to the first reaction solution in step (S1), since caution should be exercised to prevent the formation of oligomers due to reactions with monomers and a reduction in polymerization stability due to the high reactivity of the cross-linking agent, it may be preferable to add a compound, which has a slow reaction rate due to relatively low reactivity. The amount of added cross-linking functional compound may be 0.1 parts by weight to 5.0 parts by weight, preferably 0.5 parts by weight to 3.0 parts by weight, based on 100 parts by weight of the total amount of added monomers, with 0.7 parts by weight to 1.0 part by weight being preferred, and it is preferable to use a cross-linking functional compound which is different from the cross-linking functional compound added in step (S2).

According to an embodiment of the present invention, the method of preparing the cross-linked copolymer may further include adding a molecular weight regulator during polymerization in step (S1), and the molecular weight regulator may be added two or more times in a divided manner. In this case, similar effects and functions may be expected as when a polyene-based cross-linking agent is added in a divided manner, which may have a synergistic effect on the effect of adding the polyene-based cross-linking agent in a divided manner.

In the method of preparing the copolymer according to an embodiment of the present invention, polymerization in step (S1) may be performed at a temperature range of 50 °C to 150 °C, preferably 60 °C to 130 °C, more preferably 65 °C to 120 °C. When polymerization is performed within this temperature range, it may be advantageous for obtaining a final polymerization conversion rate, desired particle size characteristics, and other polymer properties.

(2) Aromatic vinyl-vinyl cyanide-based non-crosslinked copolymer

According to an embodiment of the present invention, the resin composition may include an aromatic vinyl-vinyl cyanide-based non-crosslinked copolymer. The aromatic vinyl-vinyl cyanide-based non-crosslinked copolymer may include an aromatic vinyl-based monomer unit and a vinyl cyanide-based monomer unit, and the types of these monomers may be equally selected from the types described for the cross-linked copolymer above.

The non-crosslinked copolymer may serve as a matrix in a resin composition, and the non-crosslinked copolymer has excellent heat resistance, impact resistance, and fluidity and may serve as a basis for realizing excellent physical properties of a resin molded product. The non-crosslinked copolymer may generally be obtained by applying commercially available resins and may be obtained by a commercialized method or the same manner as in the above-described cross-linked copolymer preparation method except that a cross-linking agent is not used but is not particularly limited thereto.

(3) Graft copolymer

According to an embodiment of the present invention, the graft copolymer may include a conjugated diene-based polymer, an aromatic vinyl-based monomer unit, and a vinyl cyanide-based monomer unit or may include an acrylic polymer, an aromatic vinyl-based monomer unit, and a vinyl cyanide-based monomer unit. In other words, the graft copolymer may be an acrylonitrile-butadiene-styrene-based copolymer or Acrylic-Styrene-Acrylonitrile (ASA) graft copolymer prepared based on an acrylic polymer.

The acrylonitrile-butadiene-styrene-based copolymer provides excellent moldability and impact resistance to the thermoplastic resin composition and may be a graft copolymer with a core-shell structure including a core including: a conjugated diene-based monomer unit; and a shell surrounding the core and including an aromatic vinyl-based monomer unit and a vinyl cyanide-based monomer unit.

According to an embodiment of the present invention, the conjugated diene-based monomer of the graft copolymer may be one or more selected from the group consisting of 1,3-butadiene, 2,3-dimethyl-1,3-butadiene, 2-ethyl-1,3-butadiene, 1,3-pentadiene, and isoprene, and as a specific example, may be 1,3-butadiene.

The types of aromatic vinyl-based monomers and vinyl cyanide-based monomers may be equally selected from the types described for the cross-linked copolymer above.

According to an embodiment of the present invention, the acrylonitrile-butadiene-styrene-based copolymer may be prepared through emulsion polymerization and emulsion graft polymerization and may be, for example, prepared by emulsion polymerization of conjugated diene-based monomers to prepare a core (or seed), which is a rubber polymer, and adding a vinyl cyanide-based monomer and an aromatic vinyl-based monomer to the core and performing emulsion graft polymerization.

The acrylonitrile-butadiene-styrene-based copolymer may include: 30 wt% to 70 wt% of a core including a conjugated diene-based monomer-derived unit; and 30 wt% to 70 wt% of a shell surrounding the core and including an aromatic vinyl-based monomer-derived unit and a vinyl cyanide-based monomer-derived unit, wherein the shell may include the aromatic vinyl-based monomer-derived unit and a vinyl cyanide-based monomer-derived unit in a weight ratio of 7:3 to 8:2, and in this case, the copolymer may have excellent impact resistance, mechanical properties, and moldability.

The graft copolymer may be obtained using a commercially available resin and may be obtained by a commercially available method and is not particularly limited thereto.

(4) Others

The resin composition according to an embodiment of the present invention may further include, if necessary, one or more additives selected from the group consisting of an impact modifier, a lubricant, a heat stabilizer, an anti-dripping agent, an antioxidant, a light stabilizer, an ultraviolet ray blocker, a pigment, and an inorganic filler, and the additive may be used in an amount of 5.0 parts by weight or less, or 0.1 parts by weight to 1.0 part by weight, based on 100 parts by weight of the copolymer and thermoplastic resin.

In addition, the additive may be used without particular limitation as long as it is used for a thermoplastic resin composition and, for example, the anti-dripping agent may be one or more selected from the group consisting of Teflon, polyamide, polysilicon, polytetrafluoroethylene (PTFE), and tetrafluoroethylene-hexafluoropropylene (TFE-HFP) copolymer to improve flame retardancy, and the inorganic filler may be one or more selected from the group consisting of barium sulfate, barium glass filler, and barium oxide.

**Molded product**

According to the present invention, a molded product including the above-described resin composition is provided. For example, the molded product may be used in various industrial fields such as electrical and electronic products and automobile components. Commonly used methods including extrusion, injection, and casting may be applied as a molding method, and for example, compared to a product in which a mold surface is corroded to provide a matte molded product, the molded product according to the present invention does not require corrosion treatment of the mold surface, and it is possible to provide a molded product having a matte and smooth surface in an injection-molded state without post-treatment of the molded product.

**Examples**

Hereinafter, examples of the present invention will be described in detail so that those skilled in the art can easily carry out the present invention. However, the present invention may be embodied in several different forms and is not limited to the examples described herein.

**[0088]** * Copolymer yield: indicating the degree to which monomers are polymerized through a polymerization reaction to form a polymer, and after collecting a portion of the polymer in the reactor after polymerization as a sample, the weight of the polymer without moisture was calculated through Equation 3 below, and then the sample was dissolved in a tetrahydrofuran (THF) solvent and precipitated with methanol (MeOH) to remove unreacted monomers, and the precipitated suspended solid was dried to obtain a polymer, and after measuring the weight of the polymer, the polymerization conversion rate was calculated using the following Equation 4.

(Actual weight of polymer) = (Weight of collected polymer) - (Weight of collected polymer X moisture content)   [Equation 3]

Polymerization conversion rate (%) = [(Weight of polymer obtained by drying) / (Actual weight of polymer)] X 100   [Equation 4]

**Preparation Example 1**

120 parts by weight of ion-exchanged water, 77 parts by weigh of styrene, 23 parts by weight of acrylonitrile, 0.2 parts by weight of 1,1'-azobis(cyclohexane-1-carbonitrile), 0.2 parts by weight of t-dodecyl mercaptan, and 0.7 parts by weight of 1,3,5-trimethyl-1,3,5-trivinyl-cyclotrisiloxane were added to a reactor, and after increasing the temperature of the reactor to 70 °C, 0.14 parts by weight of allyl methacrylate was added in three portions at 1-hour intervals to the reactor, and after performing polymerization for a total of 5 hours, a cross-linked copolymer (in a bead shape) was prepared by washing, dehydration, and drying, and the yield was 96%.
Each part by weight is based on 100 parts by weight of the total amount of added monomers.

**Preparation Example 2**

A cross-linked copolymer was prepared in the same manner as in Preparation Example 1, except that 0.2 parts by weight of allyl methacrylate was added, and the yield was 95%.

**Preparation Example 3**

A cross-linked copolymer was prepared in the same manner as in Preparation Example 2, except that t-dodecyl mercaptan was not added to the reactor, and after increasing the temperature, 0.2 parts by weight of allyl methacrylate and 0.2 parts by weight of t-dodecyl mercaptan were added to the reactor in three portions at 1-hour intervals, and the yield was 95%.

**Preparation Example 4**

A cross-linked copolymer was prepared in the same manner as in Preparation Example 1, except that 0.3 parts by weight of allyl methacrylate was added, and the yield was 92%.

**Preparation Example 5**

A cross-linked copolymer was prepared in the same manner as in Preparation Example 1, except that 0.2 parts by weight of allyl methacrylate was added in two portions at 1-hour intervals to the reactor, and the yield was 91%.

**Comparative Preparation Example 1**

A cross-linked copolymer was prepared in the same manner as in Preparation Example 1, except that 0.2 parts by weight of allyl methacrylate was batch-added at the beginning of the polymerization rather than after increasing the temperature of the reactor, and the yield was 86%.

**Comparative Preparation Example 2**

A cross-linked copolymer was prepared in the same manner as in Comparative Preparation Example 1, except that 0.5 parts by weight of allyl methacrylate was added, and the yield was 80%.

**Example 1**

A resin composition was prepared by mixing 20 parts by weight of the aromatic vinyl-vinyl cyanide-based cross-linked copolymer prepared in Preparation Example 1, 55 parts by weight of an aromatic vinyl-vinyl cyanide-based non-crosslinked copolymer (83SF commercially available from LG Chem), 25 parts by weight of a graft copolymer (DP270M commercially available from LG Chem), and 0.1 parts by weight of a heat stabilizer (IRGANOX 1010 commercially available from BASF SE).

**Example 2**

A resin composition was prepared in the same manner as in Example 1, except that 20 parts by weight of the aromatic vinyl-vinyl cyanide-based cross-linked copolymer prepared in Preparation Example 2 was used instead of 20 parts by weight of the aromatic vinyl-vinyl cyanide-based cross-linked copolymer prepared in Preparation Example 1.

**Example 3**

A resin composition was prepared in the same manner as in Example 1, except that 20 parts by weight of the aromatic vinyl-vinyl cyanide-based cross-linked copolymer prepared in Preparation Example 3 was used instead of 20 parts by weight of the aromatic vinyl-vinyl cyanide-based cross-linked copolymer prepared in Preparation Example 1.

**Example 4**

A resin composition was prepared in the same manner as in Example 1, except that 20 parts by weight of the aromatic vinyl-vinyl cyanide-based cross-linked copolymer prepared in Preparation Example 4 was used instead of 20 parts by weight of the aromatic vinyl-vinyl cyanide-based cross-linked copolymer prepared in Preparation Example 1.

**Example 5**

A resin composition was prepared in the same manner as in Example 1, except that 20 parts by weight of the aromatic vinyl-vinyl cyanide-based cross-linked copolymer prepared in Preparation Example 5 was used instead of 20 parts by weight of the aromatic vinyl-vinyl cyanide-based cross-linked copolymer prepared in Preparation Example 1.

**Example 6**

A resin composition was prepared by mixing 30 parts by weight of the aromatic vinyl-vinyl cyanide-based cross-linked copolymer prepared in Preparation Example 1, 45 parts by weight of an aromatic vinyl-vinyl cyanide-based non-crosslinked copolymer (83SF commercially available from LG Chem), 25 parts by weight of a graft copolymer (DP270M commercially available from LG Chem), and 0.1 parts by weight of a heat stabilizer (IRGANOX 1010 commercially available from BASF SE).

**Example 7**

A resin composition was prepared by mixing 10 parts by weight of the aromatic vinyl-vinyl cyanide-based cross-linked copolymer prepared in Preparation Example 1, 65 parts by weight of an aromatic vinyl-vinyl cyanide-based non-crosslinked copolymer (83SF commercially available from LG Chem), 25 parts by weight of a graft copolymer (DP270M commercially available from LG Chem), and 0.1 parts by weight of a heat stabilizer (IRGANOX 1010 commercially available from BASF SE).

**Example 8**

A resin composition was prepared by mixing 20 parts by weight of the aromatic vinyl-vinyl cyanide-based cross-linked copolymer prepared in Preparation Example 1, 55 parts by weight of an aromatic vinyl-vinyl cyanide-based non-crosslinked copolymer (83SF commercially available from LG Chem), 25 parts by weight of a graft copolymer (SA927 commercially available from LG Chem) which was prepared based on an acrylic-based polymer, and 0.1 parts by weight of a heat stabilizer (IRGANOX 1010 commercially available from BASF SE).

**Comparative Example 1**

A resin composition was prepared in the same manner as in Example 1, except that 20 parts by weight of the aromatic vinyl-vinyl cyanide-based cross-linked copolymer prepared in Comparative Preparation Example 1 was used instead of 20 parts by weight of the aromatic vinyl-vinyl cyanide-based cross-linked copolymer prepared in Preparation Example 1.

**Comparative Example 2**

A resin composition was prepared in the same manner as in Example 1, except that 20 parts by weight of the aromatic vinyl-vinyl cyanide-based cross-linked copolymer prepared in Comparative Preparation Example 2 was used instead of 20 parts by weight of the aromatic vinyl-vinyl cyanide-based cross-linked copolymer prepared in Preparation Example 1.

**Comparative Example 3**

A resin composition was prepared in the same manner as in Example 1, except that 20 parts by weight of an aromatic vinyl-vinyl cyanide-based cross-linked copolymer (B-MAT commercially available from GE) was used instead of 20 parts by weight of the aromatic vinyl-vinyl cyanide-based cross-linked copolymer prepared in Preparation Example 1.

**Comparative Example 4**

A resin composition was prepared by mixing 75 parts by weight of an aromatic vinyl-vinyl cyanide-based non-crosslinked copolymer (83SF commercially available from LG Chem), 25 parts by weight of a graft copolymer (DP270M commercially available from LG Chem), and 0.1 parts by weight of a heat stabilizer (IRGANOX 1010 commercially available from BASF SE).

**Experimental Example 1**

The resin compositions prepared in Examples 1 to 8 and Comparative Examples 1 to 4 were put into a twin-screw extruder, mixed and extruded at 200 °C to prepare a pellet, and after the pellet was injected at 220 °C, the melt index, gloss, and light reflection coefficient of variation were measured using the following methods, and results thereof are shown in Table 1 below.

(1) Gloss: A 60° gloss was measured according to ASTM D523 using a gloss meter (VG7000 commercially available from NIPPON DENSHOKU).
(2) Light reflection coefficient of variation: derived using Phyton and the following method

1) Sample imaging: Using a DSLR camera (Canon 750D) and a 200 mm x 200 mm white LED (Collimated Backlight LTS-3PFT), a prepared sample is photographed and imaged when a distance between the camera and the sample is set to 40 cm, and a distance between the sample and the light is set to 100 cm, and an angle is 90°.
2) Grayscale conversion of sample image: The sample image is converted to grayscale (0 to 255) using the OpenCV library. A grayscale value is assigned to each pixel in the sample image, and the grayscale value is used as luminous intensity.
3) Reconstruction of the image: The image is reconstructed by dividing the image into grids of 200 $\mu$m x 200 $\mu$m and averaging luminous intensity values (grayscale values) of the pixels in each grid. Each grid has one averaged luminous intensity value.
4) Luminous intensity correction: The target grid is set as Zone 1, the 8 grids adjacent to Zone 1 are set as Zone 2, and the 16 grids adjacent to Zone 2 are set as Zone 3, and after assigning 1, -0.0625, and -0.03125 to Zone 1, Zone 2, and Zone 3, respectively, as a correction factor, the corrected luminous intensity value of the target grid is derived using Equation 2 below.

[Equation 2]

$$L = 2L^1 + \sum_{k=1}^{8}(-0.0625\,L_k^2) + \sum_{m=1}^{16}(-0.03125 L_m^3)$$

In Equation 2, L is the corrected luminous intensity value of the target grid, $L^1$ is the luminous intensity of the grid in Zone 1, $L^2_1$, $L^2_2$, $L^2_3$, ..., $L^2_8$ are the respective luminous intensities of the 8 grids in Zone 2, and $L^3_1$, $L^3_2$, $L^3_3$, ..., $L^3_{16}$ are the respective luminous intensities of the16 grids in Zone 3.

5) Average value and standard deviation: After obtaining the average and standard deviation from the corrected luminous intensity values of each grid, the light reflection coefficient of variation is derived by substituting the average value and standard deviation of the luminous intensity into Equation 1.

[Equation 1]

$$C_{LR} = D_L/M_L$$

$C_{LR}$ is a light reflection coefficient of variation, $D_L$ is a standard deviation of luminous intensity, and $M_L$ is an average luminous intensity.

(3) Melt flow index (g/10 min): Melt flow index was measured according to ASTM D1238 under conditions of 220 °C and 10 kg.

[Table 1]

|  | Gloss | Light reflection coefficient of variation | Melt flow index |
|---|---|---|---|
| Example 1 | 19 | 1.10 | 15 |
| Example 2 | 11 | 1.30 | 17 |
| Example 3 | 11 | 0.95 | 18 |
| Example 4 | 11 | 1.50 | 19 |
| Example 5 | 18 | 1.50 | 18 |
| Example 6 | 17 | 1.20 | 13 |
| Example 7 | 20 | 1.10 | 18 |
| Example 8 | 19 | 1.20 | 17 |
| Comparative Example 1 | 35 | 2.00 | 20 |
| Comparative Example 2 | 15 | 2.50 | 20 |
| Comparative Example 3 | 29 | 2.50 | 20 |
| Comparative Example 4 | 95 | 0.30 | 38 |

Referring to Table 1, it can be seen that Examples 1 to 8, in which the cross-linked copolymers of Preparation Examples 1 to 5 were applied, had low gloss and a low light reflection coefficient of variation.

On the other hand, the copolymers of Comparative Preparation Examples 1 and 2, which were polymerized by adding a cross-linking agent only at the beginning, had low yields regardless of the added amount of the cross-linking agent, and it was confirmed that Comparative Examples 1 and 2, in which these copolymers were applied, had a high light reflection coefficient of variation and high gloss compared to Examples, and Comparative Example 3, which used a commercially available cross-linked copolymer prepared by reaction extrusion, had a relatively high gloss and a high light reflection coefficient of variation compared to Examples. Comparative Example 4 had a significantly high gloss due to the absence of the cross-linked copolymer.

From the above results, when the cross-linked copolymer prepared by the method according to the present invention is used in a resin composition, a matte product with a smooth surface may be sufficiently prepared through injection, and since the process does not require any specific treatment of the injection mold, reproducibility is high, and it was confirmed that the method is suitable for mass production.

**Claims**

1. A resin composition comprising an aromatic vinyl-vinyl cyanide-based cross-linked copolymer,

   wherein a 60° gloss measured according to ASTM D523 using a gloss meter is 25 or less, and a light reflection coefficient of variation calculated by Equation 1 below is 2.0 or less:

   $$[\text{Equation 1}]$$

   $$C_{LR} = D_L/M_L$$

   where $C_{LR}$ is a light reflection coefficient of variation, $D_L$ is a standard deviation of luminous intensity, and $M_L$ is an average luminous intensity.

2. The resin composition of claim 1, wherein the aromatic vinyl-vinyl cyanide-based cross-linked copolymer is included in an amount of 1 to 30 parts by weight based on 100 parts by weight of the resin composition.

3. The resin composition of claim 1, wherein the aromatic vinyl-vinyl cyanide-based cross-linked copolymer is included in an amount of 3 to 20 parts by weight based on 100 parts by weight of the resin composition.

4. The resin composition of claim 1, wherein the gloss is 20 or less.

5. The resin composition of claim 1, wherein the light reflection coefficient of variation is 1.5 or less.

6. The resin composition of claim 1, wherein the aromatic vinyl-vinyl cyanide-based cross-linked copolymer includes a cross-linked part including a silicone-based compound unit and a polyene-based compound unit, an aromatic vinyl-based monomer unit, and a vinyl cyanide-based monomer unit.

7. The resin composition of claim 1, wherein the resin composition further includes one or more copolymers of an aromatic vinyl-vinyl cyanide-based non-crosslinked copolymer and a graft copolymer.

8. The resin composition of claim 7, comprising 5 parts by weight to 35 parts by weight of the aromatic vinyl-vinyl cyanide-based cross-linked copolymer, 45 parts by weight to 65 parts by weight of the aromatic vinyl-vinyl cyanide-based non-crosslinked copolymer, and 20 parts by weight to 30 parts by weight of the graft copolymer, based on 100 parts by weight of the resin composition.

9. The resin composition of claim 7, wherein the aromatic vinyl-vinyl cyanide-based non-crosslinked copolymer includes an aromatic vinyl-based monomer unit and a vinyl cyanide-based monomer unit, and the graft copolymer includes a conjugated diene-based polymer, an aromatic vinyl-based monomer unit, and a vinyl cyanide-based monomer unit.

10. A molded product including the resin composition of claim 1.

11. The molded product of claim 10, which is injection molded.

## INTERNATIONAL SEARCH REPORT

| | International application No. |
|---|---|
| | **PCT/KR2023/016671** |

### A. CLASSIFICATION OF SUBJECT MATTER

**C08L 25/12**(2006.01)i; **C08L 51/04**(2006.01)i; **C08L 25/08**(2006.01)i; **C08L 33/06**(2006.01)i; **C08L 55/02**(2006.01)i

According to International Patent Classification (IPC) or to both national classification and IPC

### B. FIELDS SEARCHED

Minimum documentation searched (classification system followed by classification symbols)

C08L 25/12(2006.01); C08F 2/00(2006.01); C08F 212/08(2006.01); C08F 212/10(2006.01); C08F 212/12(2006.01); C08F 220/44(2006.01); C08F 283/12(2006.01); C08K 5/06(2006.01); C08K 5/09(2006.01); C08L 55/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 방향족비닐-비닐시안계 가교 공중합체(aromatic vinyl-vinyl cyan cross-linked copolymer), 광택도(gloss), 충격강도(impact strength), 광반사 변동계수(light reflection coefficient of variation)

### C. DOCUMENTS CONSIDERED TO BE RELEVANT

| Category* | Citation of document, with indication, where appropriate, of the relevant passages | Relevant to claim No. |
|---|---|---|
| Y | KR 10-2015-0065132 A (CHEIL INDUSTRIES INC.) 12 June 2015 (2015-06-12)<br>See claims 1-19; paragraphs [0076]-[0166]; and table 2. | 1-11 |
| Y | KR 10-0401312 B1 (CHEIL INDUSTRIES INC.) 10 October 2003 (2003-10-10)<br>See paragraphs [0017]-[0020]. | 1-11 |
| A | KR 10-2016-0001571 A (CHEIL INDUSTRIES INC.) 06 January 2016 (2016-01-06)<br>See entire document. | 1-11 |
| A | KR 10-2016-0128534 A (LOTTE ADVANCED MATERIALS CO., LTD.) 08 November 2016 (2016-11-08)<br>See entire document. | 1-11 |
| A | KR 10-2021-0062312 A (LG CHEM, LTD.) 31 May 2021 (2021-05-31)<br>See entire document. | 1-11 |

✓ Further documents are listed in the continuation of Box C.    ✓ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **02 February 2024** | **05 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
|---|
| **PCT/KR2023/016671** |

**C.    DOCUMENTS CONSIDERED TO BE RELEVANT**

| Category* | Citation of document, with indication, where appropriate, of the relevant passages | Relevant to claim No. |
|---|---|---|
| A | US 5075363 A (TSUDA, Y. et al.) 24 December 1991 (1991-12-24)<br>See entire document. | 1-11 |

Form PCT/ISA/210 (second sheet) (July 2022)

## INTERNATIONAL SEARCH REPORT
### Information on patent family members

International application No.

**PCT/KR2023/016671**

| Patent document cited in search report | | | Publication date (day/month/year) | Patent family member(s) | | | Publication date (day/month/year) |
|---|---|---|---|---|---|---|---|
| KR | 10-2015-0065132 | A | 12 June 2015 | CN | 104693334 | A | 10 June 2015 |
| | | | | CN | 104693334 | B | 03 May 2019 |
| | | | | EP | 2881408 | A1 | 10 June 2015 |
| | | | | EP | 2881408 | B1 | 20 September 2017 |
| | | | | JP | 2015-108140 | A | 11 June 2015 |
| | | | | KR | 10-1702710 | B1 | 03 February 2017 |
| | | | | US | 2015-0152205 | A1 | 04 June 2015 |
| | | | | US | 9365671 | B2 | 14 June 2016 |
| KR | 10-0401312 | B1 | 10 October 2003 | KR | 10-2002-0048605 | A | 24 June 2002 |
| KR | 10-2016-0001571 | A | 06 January 2016 | CN | 105218729 | A | 06 January 2016 |
| | | | | CN | 105218729 | B | 21 September 2018 |
| | | | | KR | 10-1717819 | B1 | 17 March 2017 |
| | | | | US | 2015-0376315 | A1 | 31 December 2015 |
| | | | | US | 9850333 | B2 | 26 December 2017 |
| KR | 10-2016-0128534 | A | 08 November 2016 | None | | | |
| KR | 10-2021-0062312 | A | 31 May 2021 | CN | 113710712 | A | 26 November 2021 |
| | | | | CN | 113710712 | B | 26 December 2023 |
| | | | | EP | 3940008 | A1 | 19 January 2022 |
| | | | | EP | 3940008 | A4 | 22 June 2022 |
| | | | | KR | 10-2600497 | B1 | 10 November 2023 |
| | | | | US | 2022-0235158 | A1 | 28 July 2022 |
| | | | | WO | 2021-101101 | A1 | 27 May 2021 |
| US | 5075363 | A | 24 December 1991 | EP | 0315490 | A2 | 10 May 1989 |
| | | | | EP | 0315490 | A3 | 12 June 1991 |
| | | | | EP | 0315490 | B1 | 30 March 1994 |
| | | | | EP | 0315490 | B2 | 13 October 1999 |
| | | | | JP | 01-121350 | A | 15 May 1989 |
| | | | | JP | 07-047676 | B2 | 24 May 1995 |
| | | | | KR | 10-1989-0008242 | A | 10 July 1989 |
| | | | | KR | 10-1997-0001715 | B1 | 14 February 1997 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20220139506
- KR 20220138522

- US 4460742 A